# EUROPEAN PATENT APPLICATION

(11) **EP 4 011 997 A1**
(43) Date of publication of application: **15.06.2022**
(21) Application number: 21213269.0
(22) Date of filing: 08.12.2021
(51) Int. Cl.: C09J 7/29, C09D 5/02, C09D 7/45, C09D 7/65, C09D 175/04

(54) **A HIGH ABRASION RESISTANCE PU COATING AND ITS APPLICATION**

(30) Priority: 08.12.2020 CN 202011443209
(71) Applicant: tesa SE, 22848 Norderstedt (DE)
(72) Inventor: CAO, Min, Suzhou, 7-1702 (CN); YANG, Haofeng, Suzhou (CN); YIN, Yuqing, Suzhou (CN); ZHANG, Junting, Suzhou (CN)
(74) Representative: tesa SE

(57) **Abstract**

**Summary**

The invention describes a high abrasion resistance PU coating, characterized in that the coating is made by coating a emulsion composition containing the following components:
polyurethane dispersion
80-120 parts by weight
wetting agent
0.1-3 parts by weight
wax emulsion
0.3-3 parts by weight
cross-linking agent
1-7 parts by weight
PTFE/PE wax powder
0.01-0.1 parts by weight.

The PU coating is used for a high abrasion resistant wire harness tape.

## Description

### TECHNICAL FIELD

The invention relates to the field of materials, in particular to a high abrasion resistance PU coating and its application.

### BACKGROUND ART

For traditional wire harness tapes using PET cloth-based materials, even if a high-weight cloth (such as 130 g/m² area weight) is used, its abrasion resistance can only reach Class C (the number of wear resistance is about 573 strokes). In addition, the porous surface of the cloth will cause the adhesive to penetrate, which requires an additional higher adhesive coating (total adhesive 85-100 g/m2) to meet the basic requirements.

Therefore, when abrasion resistance and cost are considered comprehensively, it is difficult for the existing harness tape to meet the increasing OEM demand or approval demand.

### SUMMARY OF THE INVENTION

The purpose of the present invention is to provide a PU coating modified PET film with the advantages of excellent abrasion resistance, excellent peeling performance and low cost, and an adhesive tape containing the same.

In the first aspect of the present invention, it provides a high abrasion resistance PU coating, which is made by coating an emulsion composition containing the following components:
a. polyurethane dispersion 80-120 parts by weight (preferably 90-110 parts by weight, more preferably 95-105 parts by weight)
b. wetting agent 0.1-3 parts by weight (preferably 0.2-2 parts by weight, more preferably 0.3-1 parts by weight)
c. wax emulsion 0.3-3 parts by weight (preferably 0.5-2 parts by weight, more preferably 0.7-1.2 parts by weight)
d. cross-linking agent 1-7 parts by weight (preferably 1.2-5 parts by weight, more preferably 1.5-3 parts by weight)
e. PTFE/PE wax powder 0.01-0.1 parts by weight (preferably 0.02-0.08 parts by weight, more preferably 0.03-0.06 parts by weight).

In another preferred embodiment, the emulsion composition is treated at a high temperature of 100-140 °C (preferably 120-140 °C, more preferably 130-140 °C) for 2-15 minutes (preferably 5-15min, more preferably 10-15min) after being coated to obtain the coating.

In another preferred embodiment, the polyurethane dispersion is selected from the group consisting of Impranil^{®}DLC-F (anionic polycarbonate ester polyurethane dispersion), Impranil^{®}DLC-T (aliphatic, polyester-polycarbonate based anionic polyurethane dispersion, solvent free), Hydran ADS-110 (ester polyurethane dispersion), Permutex EVO RU-92-409 (medium soft aliphatic polyester-based polyurethane dispersion), or a combination thereof.

In another preferred embodiment, the wetting agent is selected from the group consisting of: BYK349 (a silicone surfactant for aqueous coatings, adhesives and maintenance products with a considerable reduction in the surface tension and therefore good substrate wetting), BYK-156 (wetting and dispersing additive on the basis of an ammonium polyacrylate for aqueous architectural coatings and adhesives for pigment stabilization), DISPERBYK-190 (VOC and solvent-free wetting and dispersing additive for aqueous coating systems, printing inks and adhesives. Standard additive for binder-free pigment concentrates), or a combination thereof.

In another preferred embodiment, the wax emulsion is selected from the group consisting of: BYK 23142, AQUACER 1063 (Polyethylene dispersion to improve the anti-caking properties of hot-melt adhesives and to increase adhesion in dispersion adhesives for the packaging sector., AQUACER 1031 (Emulsion based on a polyethylene wax for improving the surface properties of aqueous care products. Anti-slip effect and good foot traffic resistance), or a combination thereof.

In another preferred embodiment, the cross-linking agent is selected from the group consisting of: Imprafix^{®}IO 3025 (Hydrophilic aliphatic polyisocyanate based on hexamethylene diisocyanate (HDI)), Desmodur^{®}N3900 (low-viscosity, aliphatic polyisocyanate resin based on hexamethylene diisocyanate), Imprafix^{®} 2794 (waterbased aliphatic blocked polyisocyanate), or a combination thereof.

In another preferred embodiment, the PTFE/PE wax powder is selected from the group consisting of: ST-863QF, ST-863Q, ST-476, or a combination thereof.

In another preferred embodiment, the average particle size of the PTFE/PE wax powder is 2-20 µm, preferably 2-15 µm, more preferably 2-10 µm.

In another preferred embodiment, the thickness of the coating is 2-50 µm (preferably 3-40 µm, preferably 4-30 µm, preferably 5-20 µm, preferably 6-15 µm, more preferably 7-10 µm).

In the second aspect of the present invention, a modified PET film is provided, and the high abrasion resistance PU coating of the first aspect of the present invention is coated onto one main surface of the PET film.

In another preferred embodiment, the modified PET film has one or more characteristics selected from the group consisting of:
1) the thickness of the PET film is 10-50 µm (preferably 15-45 µm, preferably 20-40 µm, more preferably 23-38 µm);
2) the weight of the PET film is 10-80 g/m² (preferably 20-70 g/m², preferably 30-60 g/m², more preferably 40-55 g/m²);
3) the porosity of the PET film is 0%;
4) the air permeability of the PET film is 5.8*10⁻⁷-5*10⁻⁸L/(m²*s) (preferably 3.8*10⁻⁷-10*10⁻⁸L/(m²*s), more preferably 1.8*10⁻⁷- 15*10⁻⁸L/(m²*s));
5) the thickness of the modified PET film is 12-100 µm (preferably 15-80 µm, more preferably 18-60 µm, most preferably 20-50 µm);
6) the weight of the modified PET film is 13-90 g/m² (preferably 20-80 g/m², more preferably 30-70 g/m², most preferably 40-60 g/m²).

In the third aspect of the present invention, a wire harness tape is provided, it comprises:
1) the modified PET film of the second aspect of the present invention, and
2) a glue layer, which is bonded to the other main surface of the PET film of the modified PET film;
in the wire harness tape, the PU coating and the glue layer are respectively located on two main surfaces of the PET film.

In another preferred embodiment, the glue layer is obtained by coating an adhesive selected from the group consisting of: emulsion type polyacrylic acid adhesive, hot melt type polyacrylate adhesive, solvent type polyacrylate adhesive, or a combination thereof.

In another preferred embodiment, the thickness of the glue layer is 40-140 µm (preferably 50-120 µm, more preferably 70-100 µm, most preferably 80-100 µm);
the weight of the glue layer is 50-150 g/m² (preferably 65-130 g/m², more preferably 80-110 g/m²).

In another preferred embodiment, the thickness of the wire harness tape is 52-240 µm (preferably 68-205 µm, more preferably 96-155 µm, most preferably 110-148 µm).

In the fourth aspect of the present invention, an adhesive product is provided, and the wire harness tape of the third aspect of the present invention is used for tying, fixing and protecting wires used in the adhesive product.

In another preferred embodiment, the adhesive product is a wire harness for the automobile industry.

It should be understood that in the present invention, any of the technical features specifically described above and below (such as in the Examples) can be combined with each other, which will not redundantly be described one by one herein.

### DESCRIPTION OF FIGURES

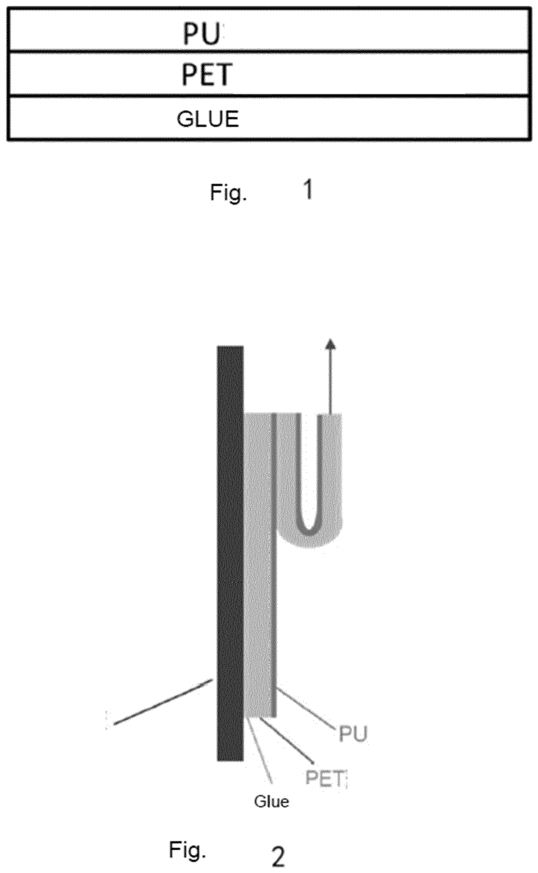

Figure 1 is a schematic diagram of the wire harness tape of the present invention.
Figure 2 is a schematic diagram of the peel performance test of the present invention.
Figure 3 is a picture of the wire harness tape C2 based on the PET cloth-based material obtained in Comparative Example 2.
Figure 4 is a picture of the wire harness tape based on the PET film modified by the PU coating of the present invention, wherein the color of the PU coating is colorless and transparent, and the color of the wire harness tape is the color of the PET film.
Figure 5 is a schematic diagram of the abrasion resistance test of the present invention.

### DETAILED DESCRIPTION OF THE INVENTION

After long-term and intensive research, the inventors have obtained a wire harness tape with excellent abrasion resistance and peeling performance by adding wax powder into the PU emulsion, and preferably optimizing its formula, and then applying the obtained PU emulsion onto the PET film and adding glue. On this basis, the inventors have completed the present invention.

### PET cloth-based material and PET film material

In the present invention, the term "PET cloth-based material" refers to polyester fiber, referred to as polyester for short, which is a synthetic fiber obtained by melt spinning polyester formed by polycondensation of organic dibasic acid and diol. Melt spinning includes the following steps: ① preparation of spinning melt; ② the melt is extruded through the spinneret to form a melt stream; ③ the melt stream is cooled and solidified to form nascent fibers; ④ the nascent fiber is oiled and wound; ⑤ spun into cloth. The molecular composition is short aliphatic hydrocarbon chain, ester group, benzene ring, alcohol-terminated hydroxyl group. The advantage is that it has higher strength and elastic recovery ability and has better compliance in curved surface bonding. However, because it is made of fiber textiles, there are more pores on the surface, which is easy to cause the glue to penetrate, so more glue needs to be coated, and it also causes odor problems.

In the present invention, the term "PET film material" refers to a film obtained after drying, melt-extrusion, casting, and biaxial stretching of polyester chips formed by polycondensation of organic dibasic acid and diol. The molecular chain is composed of short aliphatic hydrocarbon chains, ester groups, benzene rings, and alcohol-terminated hydroxyl groups. Good air tightness, excellent mechanical properties, high tensile strength and impact resistance. Because there are no voids on the surface, it can avoid glue penetration, reduce the amount of glue applied, and block the escape of odors.

In addition, PET cloth-based materials and PET film materials also have the following distinguishing characteristics, as shown in Table 1.

**Table 1**

| | PET cloth-based material | PET film material |
|---|---|---|
| cost | generally 3-4.2 RMB/m² | generally only 0.4-1.6 RMB/m² |
| weight | 70-160 g/m² | 30-60 g/m² |
| thickness | 100-220 µm | 25-50 µm |
| abrasion resistance | 15-500 strokes | 5-20 strokes |
| porosity | 48-60% | 0% |
| air permeability (pressure difference 200 Pa | 30-50 L/(m²*s) | 5.8*10⁻⁷-5*10⁻⁸L/(m²*s) |

### PU coating modified PET film material and wire harness tape

The present invention provides a modified PET film (approximately 50 g/m²) with an additional PU coating (approximately 10 g/m²), which is backed to provide a smooth surface without adhesive penetration, therefore, a wire harness tape using lower adhesive coating weight (70 g/m²) can be obtained to meet the requirements. This design can achieve the effects of light weight and low odor.

The present invention provides a high abrasion resistance PU coating on a film (such as a PET film), and the obtained product can be used for wire harness tape.

In the present invention, the PU emulsion forming the PU coating contains the following components: PU dispersion, PE/PTFE wax powder, additives (for example, cross-linking agent, wetting agent, etc.).

It should be understood that in the present invention, the PU dispersion has already been polymerized, and it is further cross-linked after being coated on the surface of the film by high temperature treatment.

In the present invention, by adding a specific PE/PTFE wax powder into the PU emulsion and coating the obtained PU emulsion on the PET film, the obtained PU coating has excellent abrasion resistance, and the obtained PU coating modified PET film can obtain an abrasion resistance equivalent to that of the PET cloth-based material with a thickness of 204 µm and a weight of 130 g/m² at a relatively low weight (such as 50-60 g/m²) and a relatively thinner thickness (such as 35-50 µm). After applying glue weighing about 90-100 g/m² onto the aforementioned PET cloth-based material and the PU coating modified PET film respectively, the abrasion resistance of the wire harness tape obtained by using the PU coating modified PET film of the present invention is significantly improved ( it can be 1534 times), which is significantly better than the abrasion resistance of the wire harness tape obtained by using PET cloth-based material (only 573 times).

In the present invention, although the abrasion resistance of the PET film alone is very poor (only 6 times), through the modification of the PU coating of the present invention, the abrasion resistance of the resulting product has been significantly improved (6 increases to 160, an increase of about 27 times). After further application of glue, the abrasion resistance of the resulting product has achieved a more significant improvement (596 increased to 1534, an increase of about 2.6 times).

The PU coating of the present invention can significantly improve the abrasion resistance of the pure film and can also realize the release function (or peeling function) without an additional release coating (or peeling coating).

It should be understood that, in the present invention, the preparation of the PU emulsion, the coating of the PU coating, and the application of glue can be achieved in a conventional manner in the art and will not be repeated here.

It should be understood that in the present invention, the term "comprising" can be used interchangeably with the following terms: "mainly composed of", "consisting of".

Compared with the prior art, the present invention has the following main advantages:
(1) The abrasion resistance of the PET film tape modified with PU coating (about 1534 strokes) is significantly better than that of PET cloth-based tape (about 573 strokes);
(2) Compared with the traditional PET cloth-based wire harness tape, it saves costs (the cost of PET cloth-based tape is about 5.93 RMB/m², and the cost of PU coating modified PET film tape is about 4.29 RMB/m²);
(3) The thickness/weight of the film is easy to adjust;
(4) No penetration of adhesive reduces the coating weight of the adhesive and saves the amount of adhesive;
(5) Low odor (the air permeability of the film is almost zero, which can prevent the escape of gas) (VDA270:2018 odor test results: under the test condition of 80 degrees, 4.5 for the PET cloth-based tape, and 3.5 for the PU coating modified PET film tape, the lower the score, the smaller the smell);
(6) The PU coating of the present invention has excellent abrasion resistance. The PET film modified by the PU coating of the present invention can achieve excellent abrasion resistance with extremely low thickness and low weight. After applying the glue, the wire harness tape obtained by the present invention has the advantages of excellent peeling performance, excellent abrasion resistance, low cost, and environmental protection;
(7) The PET film treated with PU coating is light in weight, which can help realize the lightweight of the car while meeting the abrasion resistance.

The present invention will be further illustrated below with reference to the specific examples. It should be understood that these examples are only to illustrate the invention but not to limit the scope of the invention. The experimental methods with no specific conditions described in the following examples are generally performed under the conventional conditions, or according to the manufacturer's instructions. Unless indicated otherwise, parts and percentage are calculated by weight.

Unless otherwise defined, all professional and scientific terminology used in the text have the same meanings as known to the skilled in the art. In addition, any methods and materials similar or equal with the record content can apply to the methods of the invention. The method of the preferred embodiment described herein and the material are only for demonstration purposes.

### General raw materials

1) PET cloth-based material: purchased from Suzhou Tongchu Textile Technology Co., Ltd., model F119;
2) PET film: purchased from Mitsubishi Chemical, model Hostaphan RNK;
3) PU emulsion components:
   3-1) Polyurethane dispersion: purchased from Covestro Polymers (China) Co., Ltd., brand Impranil^{®}DLC-F, 40% solid content;
   3-2) Wetting agent: purchased from BYK, model BYK349, silicone type;
   3-3) Wax emulsion: purchased from BYK, model BYK23142, used to improve abrasion resistance;
   3-4) Cross-linking agent: purchased from Covestro Polymers (China) Co., Ltd., model Imprafix@IO 3025;
   3-5) PTFE/PE wax powder: purchased from Santuo Chemical, model ST-863QF, shape white powder, particle size 2-9 µm;
4) Glue: produced in tesa, model tesa-01, composition: octyl acrylate, n-butyl acrylate, methyl methacrylate, vinyl acetate, acrylic acid. It should be understood that the technical effects equivalent to that of the present invention can also be obtained by using conventional commercially available acrylic glue in the field.

### General test method

### Abrasion resistance test

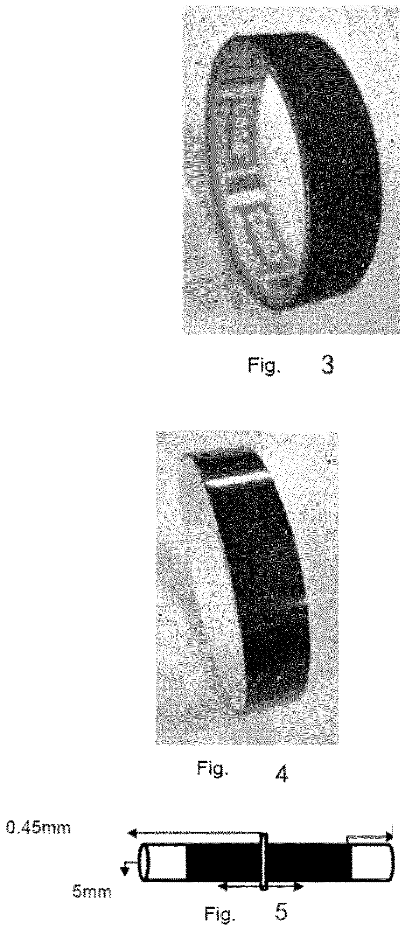

Test method: VW 60360:2006-03, the details are as follows: Take a 10 cm long tape sample and stick it on a steel rod with a diameter of 5 mm, a steel needle with a diameter of 0.45mm as a friction object, apply a force of 7N to the tape, back and forth friction, the friction length is 15 mm, and record the number of friction when the tape is broken. (See Figure 5)

Test Conditions:
1) Equipment: needle-shaped friction instrument
2) Vertical force: 7N
3) Friction frequency: 55±5 times/min
4) Friction length: 15±1mm
5) Number of tape layers: single layer

Test performance classification:

| Class A | Frictionless | <100 strokes |
|---|---|---|
| Class B | Slightly frictional | 100-499 strokes |
| Class C | Moderate frictional | 500-999 strokes |
| Class D | High frictional | 1000-4999 strokes |
| Class E | Very high frictional | >5000 strokes |

### Peel performance test

Test method: Cut the tape into 25 mm wide splines, first stick one on the steel plate, then stick the other on the back of the above spline, use a 4 kg steel rod to roll 5 back and forth, and then use a speed of 300 mm/min and 180° for peeling.

The test is used to test the peel performance of the glue on the PU coating.

Test Conditions:
1) Peeling angle: 180°
2) Peeling speed: 300 mm/min
3) Tape width: 25 mm

Test performance classification:

| | |
|---|---|
| Peelable | 1.5-4N/cm |
| Not peelable | >4N/cm |

### Gas permeability test

### Test method: DIN EN ISO 9237

Test the volume of gas passing through a unit area of 20 cm² and a pressure difference of 200 Pa the sample at a constant temperature and unit pressure difference per unit time.

### Porosity test

Use mercury intrusion method to test, also known as mercury porosity method. It is a method of measuring pore size distribution. The basic principle is that mercury does not wet general solids, and external pressure must be applied to allow mercury to enter the pores. The greater the external pressure, the smaller the pore radius into which mercury can enter. By measuring the amount of mercury entering the pores under different external pressures, the pore volume of the corresponding pore size can be known. The maximum pressure of the mercury porosimeter used is about 200MPa, and the measuring pore range: 0.0064->950 µm (pore diameter).

### Smell test

Test method: VDA270:2018, the details are as follows: the glued surface of the sample is covered with aluminum foil, the sample is sealed in a container, placed at 80 °C for 2h, and then five specially trained inspectors sniff and distinguish. The evaluation criteria are divided into six levels: 1=no peculiar smell; 2=slight smell; 3=taste but not irritating; 4=pungent smell; 5=strong pungent smell; 6=unbearable taste.

### Example 1 PU emulsion 1

100 parts by weight of polyurethane dispersion Impranil^{®}DLC-F, 0.6 parts by weight of wetting agent BYK349, 0.8 parts by weight of wax emulsion BYK23142, 2 parts by weight of cross-linking agent Imprafix^{®}IO 3025 and 0.05 parts by weight of PTFE/PE wax powder ST-863QF were provided, stirred and mixed to obtain PU emulsion 1.

### Example 2 PU coating modified PET film 1

A PET film (thickness 36 µm, weight 50 g/m²) and the PU emulsion 1 prepared in Example 1 were provided. A 7 µm PU coating 1 was applied on the PET film by comma roll coating and subjected to high temperature treatment at 130 °C for 10 minutes to obtain PU coating modified PET film 1.

The thickness of the PU coating modified PET film 1 is 43 µm and the weight thereof is 57 g/m².

### Example 3 Wire harness tape 1

Tesa-01 glue and the PU coating modified PET film 1 prepared in Example 2 were provided. On the PET film side of the PU coating modified PET film 1, a 90 µm glue layer (the weight of the glue layer is 90 g/m²) was applied by comma roll coating to obtain wire harness tape 1 (thickness 133 µm).

### Comparative example 1 wire harness tape C1 (using non-PU coating modified PET film)

Same as Example 3, the difference lies in: using the PET film (thickness 36 µm, weight 50 g/m²) used in Example 2 instead of the PU coating modified PET film 1 obtained in Example 2, that is, using non-PU coating modified PET film.

The thickness of the resulting wire harness tape C1 is 126 µm.

### Comparative Example 2 Wire harness tape C2 (using PET cloth-based material instead of the PU coating modified PET film 1 prepared in Example 2)

Same as Comparative Example 1, the difference lies in: using PET cloth-based material F119 (thickness 204 µm, weight 130 g/m²) instead of PET film.

The thickness of the resulting wire harness tape C2 is 249 µm, and the photo is shown in Figure 3.

The above products were tested for abrasion resistance and peeling performance.

See Table 2 for related product information of Examples 2-3 and Comparative Examples 1-2.

**Table 2**

| | thickness (µm) | weight (g/m²) | abrasion resistance strokes | peel performance (N/cm) |
|---|---|---|---|---|
| Example 2 (PET film) | 36 | 50 | 6 | - |
| Example 2 (PU coating modified PET film 1) | 43 | 57 | 160 | - |
| Example 3 (Wire harness tape 1 using PU coating modified PET film 1) | 133 | 147 | 1534 | 1.71 |
| Comparative Example 1 (Wire harness tape C1, using PET film) | 126 | 140 | 596 | 10 |
| Comparative example 2 (PET cloth-based material) | 204 | 130 | 168 | - |
| Comparative Example 2 (Wire harness tape C2, using PET cloth-based material) | 249 | 220 | 573 | 4 |

It can be seen from the above table that compared with the PET film (Comparative Example 1), the peeling performance after PU coating modification (Example 3) reaches the peelable range, and the abrasion resistance reaches Class D. Compared with the PET cloth-based tape (Comparative Example 2), the abrasion resistance of Example 3 is significantly improved.

Similarly, the following preparation examples are provided (see Example 1 for the amount of each substance), with the difference that a PET film with a thickness of 25 µm and a weight of 32 g/m² was used instead of the PET film in Example 2 (thickness of 36 µm, and a weight of 50 g/m²). Its performance is shown in Table 3.

**Table 3**

| Preparation example | composition | thicknes s (µm) | weight (g/m2) | abrasion resistanc e times | peel performanc e (N/cm) |
|---|---|---|---|---|---|
| 1 | PET film | 25 | 32 | 6 | - |
| 2 | PET film+Impranil^{®}DLC-F+BYK23142+Imprafix@IO 3025 | 28 | 37 | 10 | - |
| 3 | PET film+Impranil^{®}DLC-F+BYK349+BYK23142+Imprafix@I O 3025 | 28 | 37 | 11 | - |
| 4 | PET film+Impranil^{®}DLC-F+BYK349+BYK23142+Imprafix@I O 3025+PTFE/PE wax powder | 29 | 38 | 21 | - |
| 5 | Wire harness tape 2 (corresponding to preparation example 1) | 115 | 122 | 203 | 10.5 |
| 6 | Wire harness tape 3 (corresponding to preparation example 2) | 118 | 127 | 300 | 9.1 |
| 7 | Wire harness tape 4 (corresponding to preparation example 3) | 118 | 127 | 613 | 5.7 |
| 8 | Wire harness tape 5 (corresponding to preparation example 4) | 119 | 128 | 690 | 1.8 |

It can be seen from the above table that PTFE/PE wax powder needs to be added to the formula of PU coating to significantly improve the abrasion resistance and provide peeling performance, otherwise the tape prepared will not be peeled. After the PET film is treated with the optimized PU coating formula (Preparation Examples 3 and 4), the finished wire harness tapes 4 and 5 have significantly improved abrasion resistance compared to the wire harness tape 2. After adding PTFE/PE wax powder to the PU coating, the finished wire harness tape 5 also has peeling performance.

### Preparation examples 9-13 Wire harness tapes 6-9

Same as Example 3, the difference lies in: the addition amount of PTFE/PE wax powder was different.

The peeling performance of each wire harness tape is shown in Table 4 below.

**Table 4**

| Preparation example | | Addition amount of PTFE/PE wax powder (parts by weight) | Peeling force (N/cm) |
|---|---|---|---|
| 9 | Wire harness tape 6 | 0 | 5 |
| 10 | Wire harness tape 1 | 0.05 | 1.71 |
| 11 | Wire harness tape 7 | 0.1 | 1.08 |
| 12 | Wire harness tape 8 | 0.5 | 0.39 |
| 13 | Wire harness tape 9 | 1.1 | 0.24 |

It can be seen from the above table that the addition amount of PTFE/PE wax powder needs to be within a reasonable range to make the peeling performance reach the required value.

All literatures mentioned in the present invention are incorporated by reference herein, as though individually incorporated by reference. Additionally, it should be understood that after reading the above teaching, many variations and modifications may be made by the skilled in the art, and these equivalents also fall within the scope as defined by the appended claims.

## Claims

1. A high abrasion resistance PU coating, **characterized in that** the coating is made by coating an emulsion composition containing the following components:
polyurethane dispersion 80-120 parts by weight
wetting agent 0.1-3 parts by weight
wax emulsion 0.3-3 parts by weight
cross-linking agent 1-7 parts by weight
PTFE/PE wax powder 0.01-0.1 parts by weight.

2. The coating according to claim 1, wherein the emulsion composition is treated at 120-140 °C for 2-15 min after coating to obtain the coating.

3. The coating of claim 1, wherein the thickness of the coating is 2-50 µm.

4. A modified PET film, **characterized in that** the high abrasion resistance PU coating of claim 1 is bonded to a main surface of a PET film.

5. The modified PET film of claim 4, which has one or more characteristics selected from the following group:
1) the thickness of the PET film is 10-50 µm;
2) the weight of the PET film is 10-80 g/m²;
3) the porosity of the PET film is about 0 %;
4) the air permeability of the PET film is 5.8*10-7L/m²*s
5) the thickness of the modified PET film is 12-100 µm;
6) the weight of the modified PET film is 13-90 g/m².

6. A wire harness tape, **characterized in that** it contains:
1) the modified PET film of claim 4, and
2) a glue layer, which is bonded to the main surface of the PET film of the modified PET film; in the wire harness tape, the PU coating and the glue layer are respectively located on two main surfaces of the PET film.

7. The wire harness tape of claim 6, wherein the glue layer is coated with an adhesive selected from the following group: emulsion type acrylate adhesive, solvent type acrylate adhesive, hot melt type acrylate adhesive, or a combination thereof.

8. The wire harness tape of claim 6, wherein the thickness of the glue layer is 40-140 µm; and/or the weight of the glue layer is 50-150 g/m².

9. The wire harness tape of claim 6, wherein the thickness of the wire harness tape is 52-240 µm.

10. An adhesive product, **characterized in that** the wire harness tape of claim 6 is used for bonding and fixing components.
